# EUROPEAN PATENT APPLICATION

(11) **EP 3 985 537 A1**
(43) Date of publication of application: **20.04.2022**
(21) Application number: 21202202.4
(22) Date of filing: 12.10.2021
(51) Int. Cl.: G06F 21/60, G06F 21/62

(54) **REMOTELY AND DYNAMICALLY CONFIGURE GUI ACCESS PRIVILEGES FOR GRANULAR ACCESS CONTROL**

(30) Priority: 14.10.2020 US 202017070732
(71) Applicant: ADVA Optical Networking SE, 98617 Meiningen (DE)
(72) Inventor: Allu, Gopi, 98617 Meiningen-Dreissigacker (DE); Newman, Christopher, 98617 Meiningen-Dreissigacker (DE)
(74) Representative: Witte, Weller & Partner Patentanwälte mbB

(57) **Abstract**

user is authenticated via remote authentication to access a managed device, the restricted GUI Element information is pushed from the remote authentication server to the managed device where this information is used to grant or deny GUI access to the corresponding functional elements of the device. The process allows for granular control of each user's rights on different managed devices.

## Description

### BACKGROUND

### FIELD OF THE DISCLOSURE

This disclosure relates generally to control of access privileges for users in a system that supports remote authentication. More specifically, this disclosure relates to providing granular permission for a specific user to access Graphic User Interface elements to manipulate settings on a particular device in a system that supports remote authentication.

### Vocabulary.

Unless explicit to the contrary, the word "or" should be interpreted as an inclusive or rather than an exclusive or. Thus, the default meaning of or should be the same as the more awkward and/or.

Unless explicit to the contrary, the word "set" should be interpreted as a group of one or more items.

To avoid the awkward uses of he/she and his/her or the potentially confusing singular use of they and their, this application uses the gender-neutral pronoun gne and the possessive gnes. Example-Gne parked gnes car in the parking lot.

The initials RAS are an abbreviation for a Remote Authentication Server.

The initials GUI are an abbreviation for Graphical User Interface. Some pronounce this as gee-you-eye while others say goo-ey.

GUI Element - Any button, tab, section, page, component or group of components shown on a GUI.

### SUMMARY OF THE DISCLOSURE

When the user is authenticated via remote authentication to access a managed device, the restricted GUI Element information is pushed from the remote authentication server to the managed device where this information is used to grant or deny GUI access to the corresponding functional elements of the device.

If the network operator wants to change the current privileges of a user, the network operator simply changes the restricted GUI element list on the remote authentication server to deny access to more elements or grant access to previously denied elements. No changes to the managed device's configuration are needed. These privileges can be allocated on a per-element basis, meaning the network operator has complete control over the user's access to any part of the device's functionality. This approach makes allocating and managing the remote authenticated user privileges completely flexible, granular and dynamic as it can be performed independent of the managed device.

Aspects of the teachings contained within this disclosure are addressed in the claims submitted with this application upon filing. Rather than adding redundant restatements of the contents of the claims, these claims should be considered incorporated by reference into this summary.

This summary is meant to provide an introduction to the concepts that are disclosed within the specification without being an exhaustive list of the many teachings and variations upon those teachings that are provided in the extended discussion within this disclosure. Thus, the contents of this summary should not be used to limit the scope of the claims that follow.

Inventive concepts are illustrated in a series of examples, some examples showing more than one inventive concept. Individual inventive concepts can be implemented without implementing all details provided in a particular example. It is not necessary to provide examples of every possible combination of the inventive concepts provide below as one of skill in the art will recognize that inventive concepts illustrated in various examples can be combined together in order to address a specific application.

Other systems, methods, features and advantages of the disclosed teachings will be immediately apparent or will become apparent to one with skill in the art upon examination of the following figures and detailed description. It is intended that all such additional systems, methods, features and advantages be included within the scope of and be protected by the accompanying claims.

### BRIEF DESCRIPTION OF THE FIGURES

The disclosure can be better understood with reference to the following figures.
**FIG. 1** provides a network diagram for a first implementation of the teachings of the present application.
**FIG. 2** is a flowchart showing process 1000 to provide a specific user with access to GUI elements.

### DETAILED DESCRIPTION

The presently disclosed subject matter is described with specificity to meet statutory requirements. However, the description itself is not intended to limit the scope of this patent. Rather, the inventors have contemplated that the claimed subject matter might also be embodied in other ways, to include different steps or elements similar to the ones described in this document, in conjunction with other present or future technologies. Moreover, although the term "step" may be used herein to connote different aspects of methods employed, the term should not be interpreted as implying any particular order among or between various steps herein disclosed unless and except when the order of individual steps is explicitly described.

### Preliminary Matters.

Before starting the detailed description, it will be useful to define a few concepts that will be used within this explanation.

There are a number of ways that a user can communicate with a computer program. One traditional way is to enter a series of commands through the entry of a series of text characters which provide commands with specific format requirements at a specific place on a screen. After hitting enter, the command is processed by the system. This is often called a command-line interface (CLI).

A different way to allow a user to communicate with a computer program is to use a graphical user interface (GUI) where a user may use a mouse or other x-y pointing input device to select items on a screen. Direct manipulation of GUI elements such as windows, icons, menus, or activation buttons provides many user inputs in lieu of CLI commands.

The present disclosure includes mapping subsets of one or more GUI elements to GUI tokens. A first user will be given a set of GUI tokens for use with a first managed device. That set of tokens will allow or disallow that first user on that first device to perform a set of manipulations of the GUI elements. This first user may have a different set of tokens and thus a different ability to manipulate a second managed device. Likewise, a second user may be given a different set of tokens for the first device and be able to do more or less than what the first user could do on that first device.

The presence of a first GUI token may be interpreted as the ability to manipulate a first set of one or more GUI elements. Alternatively, the presence of a first GUI token may be interpreted as the denial of the ability to manipulate the first set of one or more GUI elements. This would be an implementation choice.

A more complicated option would be that the presence of the token reverses the default setting for that set of one or more GUI elements. So the presence of a third GUI token may give a user the ability to use the third set of one or more GUI elements as the default while other users do not have that access but the presence of a fourth GUI token may deny a user the ability to use the fourth set of one or more GUI elements as the default while other users do have that access.

There are many ways that the tokens can be conveyed to a managed device so that the managed device knows what rights that particular user has to access the GUI elements. One way is to have an attribute that refers to a portion of the GUI elements and then convey a list of the GUI values that are conveyed for that attribute.

Thus, a conveyed message of GUI_CONFIG_GIGABIT: auto_negotiation, loop_detect would be interpreted at the managed device as providing two tokens for that particular user: a first token associated with the one or more GUI elements for the GUI_CONFIG_GIGABIT/Auto Negotiation settings, and a second GUI token for the set of one or more GUI elements associated with the GUI_CONFIG_GIGABIT/Loop Detect settings.

Alternatively, the brevity allowed by using attribute/value formatting could be replaced by passing to the managed device a set of GUI tokens directly. Thus, instead of passing GUI_CONFIG_GIGABIT: auto_negotiation, loop_detect to the managed device, the system would pass to the managed device:
- GUI_CONFIG_GIGABIT_Auto_Negotiation;
- GUI_CONFIG_GIGABIT_Loop Detect.

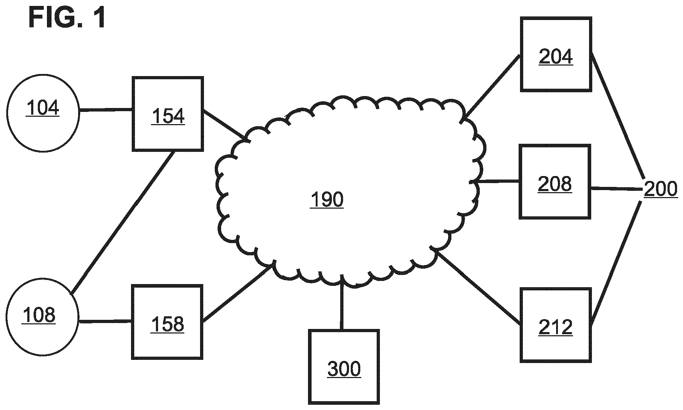

**FIG. 1** provides a network diagram for a first implementation of the teachings of the present application.

A first user Sam 104 works to manage a set of devices 200. There may be dozens or hundreds of devices that user Sam 104 may have need to manipulate. However, to make the drawing compact, the set of devices may be device 204, device 208, and device 212. The devices may be a set of switches used in a telecommunication network but could be any device where more than one user is going to have access to make changes.

Device 204, device 208, and device 212 are likely to be remote from user Sam 104 and may not all be in the same location.

User Sam 104 may access the devices through use of a laptop 154 which is connected to a data network 190 and can access the individual devices, perhaps through the use of an IP address for a particular device.

When user Sam 104 accesses device 204 and provides his authorization credentials (such as a username and password), the device 204 connects with a Remote Authorization Server (RAS) 300. The RAS 300 provides a set of permissions or denial of permissions with respect to what user Sam 104 may do to manipulate device 204.

More specifically, every set of one or more manipulations of the Graphic User Interface (GUI) has an associated GUI token. Before an input from user Sam 104 is accepted for a specific GUI input, the material sent from the RAS 300 for user Sam 104 is checked to ensure that user Sam 104 is authorized to make that change on device 204. GUI elements may be
- a single button,
- a drop-down menu,
- access to a screen,
- selection of an item from a list, or
- some other choice presented to a user.

To access settings for Quality of Service, that GUI button may have a GUI token called qosp. When user Sam 104 attempts to use the GUI button labeled Quality of Service to access a screen to make changes, a program running on device 204 checks to see if user Sam 104 has authority to do so on device 204 by checking to see whether Sam 104 has the relevant GUI token.

Later in the day, user Sue 108 may use the laptop 154 to access device 204 to make changes to device 204. Upon presentation of authorization credentials (such a username and password), the permissions or denials for user Sue 108 are provided to device 204 from RAS 300. User Sue 108 may have rights to manipulate device 204 in ways that user Sam 104 did not. For example, user Sue 108 may have the authority to instruct device 204 to reboot. When accessing a GUI element that triggers the device 204 to reboot, device 204 will check to see if the token for Reboot (maybe having token name RBT) is set to ALLOW for user Sue 108.

User Sue 108 may later use a different laptop 158 to access device 204. Again, upon providing authorization credentials to device 204, the RAS provides a list of GUI access rights to the device 204 to indicate what GUI tools may be used by user Sue to view and manipulate settings for device 204.

User Sam 104 may subsequently access device 208 through laptop 154. Device 208 will obtain a set of GUI access rights for user Sam 104 on device 208. These rights may be different than the GUI access rights provided to user Sam 104 on device 204. User Sam 104 may have similar GUI access rights for all network switches but not for other devices on the network. User Sue 108 may have GUI access rights for all network equipment in a particular geographic area.

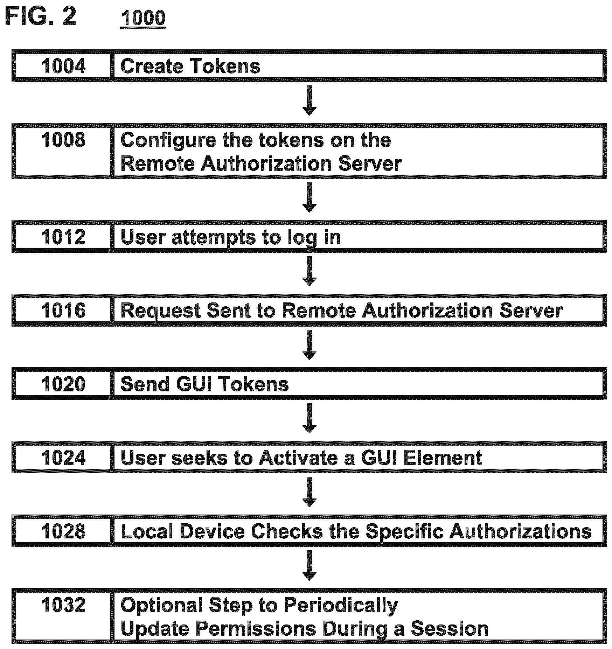

**FIG. 2** is a flowchart showing process **1000** to provide a specific user with access to GUI elements. For example, the specific user may be user Kevin.

Step **1004** Create Tokens. Each set of one or more GUI elements that may need to be accessed by some users but not all users may be associated with a unique GUI token. For example, amongst the many possible interactions that a user may have with the system, one specific interface may be to be able to create a Quality of Service profile. This specific operation of creating a Quality of Service profile may have a token called GUI_CREATE_QoS_Pro. The action of creating a Quality of Service profile may lead to a screen with many GUI elements but as one would normally not give partial rights to create a Quality of Service profile, the GUI element that allows opening of the screen to create a Quality of Service profile may be the only specific GUI element that is allowed or denied.

In other instances, a specific action on a screen may be something that is allowed to some users and not allowed to others. The ability to trigger a remote device to reboot is a major step in a communications network and not all users may need the authority to shut a remote device down to reboot. So, in this case a specific button on a specific screen may be the GUI element that is defined with a token name and subject to granular permission.

Step **1008** Configure the tokens on the Remote Authorization Server (RAS). Kevin as a specific user would have a set of tokens associated with his logon identity. A system could be implemented where Kevin has the same set of tokens for all managed devices but it is likely that the system will effectively have an array of tokens for each combination of authorized user/managed device (such as device 204).

If the system was enabled to allow Kevin to create a Quality of Service profile, then the token GUI_CREATE_QoS_Pro would be set to "allow". This can be implemented in several different ways:
- The existence of a GUI token for GUI_CREATE_QoS_Pro for Kevin/Managed device 1 may mean that Kevin has access to that set of GUI elements.
- The absence of a GUI token for GUI_CREATE_QoS_Pro for Kevin/Managed device 1 may mean that Kevin has access to that set of GUI elements.
- The GUI token may be set to carry a value such as ALLOW or DENY so that the passing of GUI tokens to managed device 1 when Kevin logs in will contain GUI_CREATE_QoS_Pro_ALLOW.

Step **1012** User Kevin attempts to log into a device 204 under the control of the RAS 300.

Step **1016** Request Sent to RAS. The managed device 204 forwards the login request to the RAS 300.

Step **1020** Send GUI Tokens. Once the RAS 300 discerns that this is indeed an authorized user, Kevin, the RAS 300 sends an array of GUI tokens to the managed device 204. These GUI tokens are used by the managed device 204 to tailor the access that Kevin has to interact with the GUI elements based on Kevin's prior approved authorizations. Perhaps there are a thousand sets of one or more GUI elements that merit GUI tokens as some GUI items like forward and back are always allowed and some GUI elements are lumped together as you would either have permission to use the set of related GUI elements or you would not. The authorization for Kevin may be sent in a variety of ways including:
- A) A set of GUI tokens to provide specific authorization values (ALLOW, DENY, VIEW, COPY) for all one thousand sets of one or more GUI elements. These gradations of partial access other than full allow or full deny may be called non-binary access rights.
- B) A set of GUI tokens corresponding to the sets of one or more GUI elements that Kevin is allowed to access, and all sets of one or more GUI elements not on the list are deemed denied. This may include partial access such as view or edit rather than full access to create.
- C) A set of GUI tokens corresponding to the sets of one or more GUI elements to which Kevin is denied access, and all sets of one or more GUI elements not on the list are deemed allowed. These gradations of partial access other than full allow or full deny may be called non-binary access rights.
- D) A set of GUI tokens indicating deviations from default settings which may make some sets of one or more GUI elements allowed when normally not allowed and may make some sets of one or more GUI elements denied when normally allowed.

Step **1024** Kevin seeks to activate a GUI element that is in a group of one or more GUI elements associated with a GUI token.

Step **1028** The local device checks the specific authorizations for Kevin for the relevant set of one or more GUI elements and grants access to Kevin accordingly.

Step **1032** Optional Step to Periodically Update Permissions During a Session.

The RAS may send a set of Kevin's GUI tokens only at the start of a session on a managed device. Alternatively, the system may periodically resend the set of GUI tokens for Kevin. The resending may be triggered by:
- A simple refresh after a fixed period of time within a session.
- A refresh at a fixed time of day such as midnight.
- A refresh whenever Kevin seeks to exercise an access right that is not given to all users.
- A refresh whenever an administrator has altered the array of Kevin's GUI tokens so that if Kevin calls in to obtain additional access rights, Kevin can continue his session without having to log out and log back in.

Note that if Kevin logs out of the managed device and after lunch logs into to a different managed device, the RAS sends Kevin's GUI tokens to this different managed device and the access provided to Kevin may be the same even though Kevin is on a different managed device. Alternatively, the set of GUI tokens provided may give Kevin different access to sets of one or more GUI elements as this is a different type of managed device and there are control screens that handle different attributes of this managed device. So, there may be sets of one or more GUI elements that appear on the controls for the managed device accessed after lunch that would not be relevant for the managed device accessed before lunch.

### ALTERNATIVES AND VARIATIONS

### Alternative forms of Authorization Credentials.

While a common form of authorization credentials is a username and password, this particular form of authorization is not required. Some systems may require other forms of authorization such as swiping a card or biometrics at the local device such as laptop 154. What is needed is a way to know who is accessing a device such as device 204 so that the appropriate set of permissions or denials is communicated to device 204 to limit the ability of that particular user to manipulate device 204 through the GUI.

### Denial of Rights.

Denial of rights to exercise a set of one or more GUI elements can be implemented in a variety of ways. One way is to show the GUI elements and when the user seeks to trigger the GUI element, simply tell the user that the user does not have rights to use that GUI element.

Denial of rights could be implemented by graying out a choice so that the user sees the choice but as the choice is in gray, the user knows that the user does not have access to that GUI element.

Denial of rights could be implemented by not presenting the choice at all. Thus, a user that does not have the rights to create a new Quality of Service profile may never see a GUI element that is used to initiate the process to create a new Quality of Service profile.

A single system may use a combination of these choices.

### Granular GUI Permissions.

In many instances, the ability to access a set of one or more GUI elements can be ALLOW or DENY. However, in some implementations, at least some GUI element permissions may be more granular than ALLOW or DENY. For example, if some users may be allowed to VIEW the Quality of Service profile but not change the settings. So, the range of permissions may be EDIT, VIEW, or DENY. In another example, a user may have the ability to upgrade the priority of a task from ROUTINE to EXPEDITED but not have the ability to upgrade the task to a higher priority level of HIGH PRIORITY or HIGHEST PRIORITY.

One of skill in the art will recognize that some of the alternative implementations set forth above are not universally mutually exclusive and that in some cases additional implementations can be created that employ aspects of two or more of the variations described above. Likewise, the present disclosure is not limited to the specific examples or particular embodiments provided to promote understanding of the various teachings of the present disclosure. Moreover, the scope of the claims which follow covers the range of variations, modifications, and substitutes for the components described herein as would be known to those of skill in the art.

Where methods and/or events described above indicate certain events and/or procedures occurring in a certain order, the ordering of certain events and/or procedures may be modified. Additionally, certain events and/or procedures may be performed concurrently in a parallel process when possible, as well as performed sequentially as described above.

The legal limitations of the scope of the claimed invention are set forth in the claims that follow and extend to cover their legal equivalents. Those unfamiliar with the legal tests for equivalency should consult a person registered to practice before the patent authority which granted this patent such as the United States Patent and Trademark Office or its counterpart.

## Claims

1. A process to allow distinctions in control rights of users on a first managed device, the process comprising:
associating sets of at least one GUI element with a GUI token for at least some of the GUI elements needed to modify settings on the first managed device;
storing at an RAS device a first set of rights for a first user to access sets of at least one GUI elements on the first managed device; the first set of rights denying access to a nth set of at least one GUI element;
storing at the RAS device a second set of rights for a second user to access sets of at least one GUI element on the first managed device; the second set of rights allowing access to the nth set of at least one GUI element;
after a first presentation of a first user's authorization credentials by the first user to the first managed device, send the first user's authorization credentials to the RAS device;
receive from the RAS device the first set of rights for the first user on the first managed device;
allow the first user to interact with the at least some of the sets of at least one GUI element and deny access to the nth set of at least one GUI element;
after presentation of a second user's authorization credentials by the second user to the first managed device, send the second user's authorization credentials to the RAS device;
receive from the RAS device the second set of rights for the second user on the first managed device; and
allow the second user to interact with at least some of the sets of at least one GUI element and allow access to the nth set of at least one GUI element to allow the second user to modify the first managed device using the nth set of at least one GUI element.

2. The process of claim 1 wherein the first set of rights for the first user on the first managed device received from the RAS device is a set of GUI tokens for each set of at least one GUI element that the first user is allowed to access.

3. The process of claim 1 wherein the first set of rights for the first user on the first managed device received from the RAS device is a set of GUI tokens for each set of at least one GUI element to which the first user is denied access.

4. The process of any preceding claim wherein the first set of rights for the first user on the first managed device received from the RAS device includes at least one non-binary access right to interact with a particular set of at least one GUI element.

5. The process of any of claims 1 to 3 wherein the first set of rights for the first user on the first managed device received from the RAS device is a set of GUI tokens for each set of at least one GUI element to which the first user is provided an opposite value of a default user access for each set of at least one GUI element.

6. The process of any preceding claim wherein the first set of rights for the first user on the first managed device received from the RAS device includes at least one attribute (A) with at least two attribute values (1, 2) and the first managed device interprets Attribute(A):(1, 2) as conveying a first token AttributeA_1 and a second token AttributeA_2.

7. The process of any preceding claim wherein the first set of rights for the first user for the first managed device is updated by a subsequent transmission from the RAS device to the first managed device before a second presentation of authorization credentials by the first user to the first managed device.

8. The process of any preceding claim wherein the first user is denied access to the nth set of at least one GUI element after the first user attempts to trigger the nth set of at least one GUI element.

9. The process of any of claims 1 to 7 wherein the first user is denied access to the nth set of at least one GUI element by showing the nth set of at least one GUI element as grayed out and unavailable to the first user.

10. The process of any of claims 1 to 7 wherein the first user is denied access to the nth set of at least one GUI element by not showing the nth set of at least one GUI element to the first user.
